Europäisches Patentamt

European Patent Office

Office européen des brevets

(19)

(11) Veröffentlichungsnummer: **0 257 625 B1**

(12) EUROPÄISCHE PATENTSCHRIFT

(45) Veröffentlichungstag der Patentschrift: 27.12.91

(51) Int. Cl.⁵: **H04L 27/38**

(21) Anmeldenummer: 87112352.7

(22) Anmeldetag: 25.08.87

(54) Fangschaltung für die Trägerrückgewinnung aus einem QAM-Signal.

(30) Priorität: 28.08.86 DE 3629184

(43) Veröffentlichungstag der Anmeldung:
02.03.88 Patentblatt 88/09

(45) Bekanntmachung des Hinweises auf die
Patenterteilung:
27.12.91 Patentblatt 91/52

(84) Benannte Vertragsstaaten:
AT CH DE GB IT LI NL

(56) Entgegenhaltungen:

PATENT ABSTRACTS OF JAPAN, Band 8, Nr.
29 (E-226)[1466], 7. Februar 1984; & JP-A-58
190 135

PATENT ABSTRACTS OF JAPAN, Band 10,
Nr. 141 (E-406)[2198], 24. Mai 1986; & JP-A-61
3553

(73) Patentinhaber: SIEMENS AKTIENGESELL-
SCHAFT
Wittelsbacherplatz 2
W-8000 München 2(DE)

(72) Erfinder: Boshold, Klaus, Dipl.-Ing. (FH)
Sudetenstrasse 7
W-8912 Kaufering(DE)

**Beschreibung**

Die Erfindung bezieht sich auf eine Fangschaltung für die Trägerrückgewinnung aus einem QAM - Signal in der aus einem Demodulator und einer aus einem spannungsgesteuerten Oszillator ( VCO) und einer Trägersignal-Regelspannungserzeugung bestehenden Taktrückgewinnungsschaltung aufgebauten Demodulationsschaltung eines Digital-Funksystems mit einer Pegelüberwachung am Eingang der Demodulationsschaltung und einer Fehlerüberwachung für die Bitfehlerrate an deren Ausgang.

Der generelle Aufbau eines solchen Funksystems mit seinen Sende- und empfangsseitigen Einrichtungen ist in dem Aufsatz "140-Mbit/s-Modem für Digital-Richtfunksysteme mit 16 QAM" von H. Barth und J. A. Nossek beschrieben, erschienen in telcom report 6 (1983) Heft 5, Seiten 271 -276. Die dabei zur Demodulation erforderlichen Quadraturträger werden von einem 140 MHz - Oszillator und einer 90° - Verzweigung geliefert, wobei die Phase des Oszillatorsignals mit Hilfe einer getakteten Regelschleife nachgeführt wird.

In der Demodulationsschaltung für ein quadraturamplitudenmoduliertes Signal ist es notwendig, daß sich eine Synchronysierung der Phasenlage des Trägersignals mit der des QAM - Signals einstellt. Nach einer Unterbrechung des QAM - Signals kann jedoch eine Differenz (Frequenzablage) zwischen der Trägerfrequenz des Eingangssignals und der VCO - Frequenz vorhanden sein. Ursachen hierfür sind eine Toleranz der im Modulator erzeugten Trägerfrequenz, ein Umsetzfehler auf der Richtfunkverbindung, eine Toleranz des VCO oder ein Offset der Regelspannungserzeugung, wobei diese Fehler von üblichen Umgebungstemperatur- und Versorgungsspannungsschwankungen beeinflußt sein können.

Wegen dieser Frequenzablage und der im Vergleich zu dieser geringen Bandbreite der Regelschleife (zur Rückgewinnung eines ausreichend jitterfreien Trägersignals erforderlich) muß oft eine Fangschaltung, die ein Wobbeln des VCO bewirkt, vorgesehen werden.

Eine Fangschaltung der eingangs genannten Art, durch deren speziellen Ausbildung das Auftreten von unzulässigen Fangzuständen verhindert wird, ist in einer europäischen Patentanmeldung ( EP-A-219 86, veröffentlicht am 29/4/87) der gleichen Anmelderin beschrieben.

Der vorliegenden Erfindung liegt die Aufgabe zugrunde, eine Fangschaltung zu schaffen, die ein möglichst schnelles Synchronisieren der Trägerrückgewinnung nach einer Signalunterbrechung, die z. B. durch Fading hervorgerufen wurde, erreicht.

Diese Aufgabe wird gemäß der Erfindung in der Weise gelöst, daß zwischen Trägersignal- Regelspannungserzeugung und spannungsgesteuerten Oszillator (VCO) eine Speicherschaltung angeordnet ist, der im Fall einer Frequenzablage eine am VCO-Eingang anstehende, von Null abweichende Regelspannung über einen von der Fehlerüberwachung angesteuerten Schalter zugeführt und in ihr zu der von der Trägersignal-Regelspannungserzeugung abgegebenen Spannung addiert wird und daß im Fall einer zu erwartenden Unterbrechung der Signalübertragung durch Ansteigen der Bitfehlerrate über einen bestimmten Schwellenwert die Fehlerüberwachung das Abtrennen der Speicherschaltung vom VCO-Eingang vor der Unterbrechung veranlaßt.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispieles näher erläutert.

Es zeigen:

Fig. 1     eine Fangschaltung im Blockschaltbild und

Fig. 2     in einer graphischen Darstellung den Verlauf der Wobbelspannung.

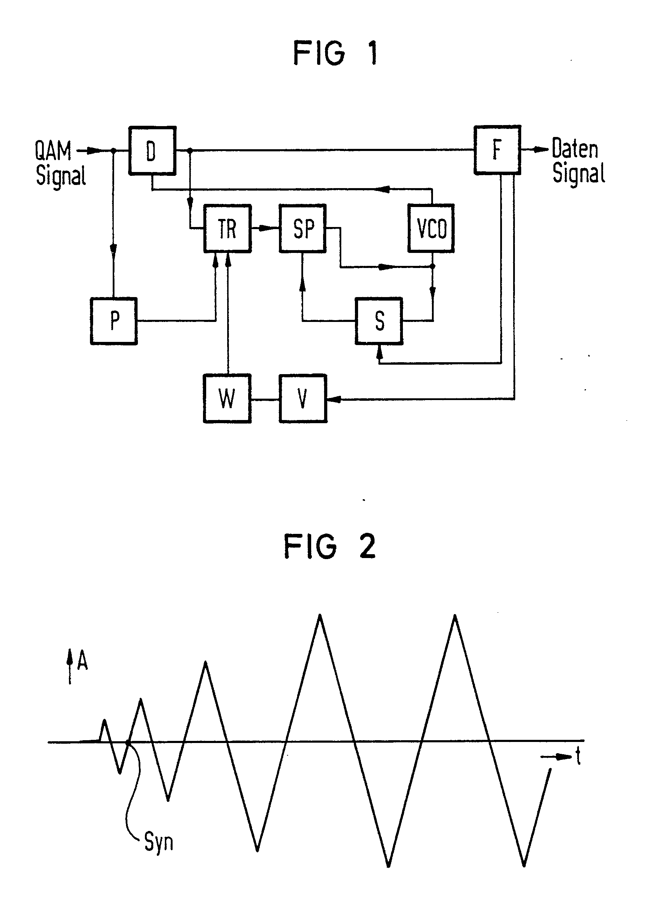

Die Schaltung nach Figur 1 enthält im Übertragungsweg einen QAM-Demodulator D, dem ein QAM-Signal zugeführt wird. Der Demodulator D ist mit einem spannungsgesteuertem Oszillator VCO und einer Trägersignal-Regelspannungserzeugung TR verbunden, die die Trägerrückgewinnungsschaltung bilden. Vor dem Demodulator D ist eine Eingangspegelüberwachung P angeschaltet, die mit der Tägersignal-Regelspannungserzeugung TR verbunden ist. Ausgangsseitig ist im Übertragungsweg eine Überwachungsschaltung F für die Bitfehlerrate (Überwachung der Augenöffnung, Codeverletzung oder ähnliches) eingeschaltet. Zwischen Trägersignal-Regelspannungserzeugung TR und spannungsgesteuertem Oszillator VCO ist eine Speicherschaltung SP angeordnet, die bewirkt, daß der VCO bei Signalwiederkehr mit der vor der Unterbrechung vorhanden gewesenen Frequenz weiterschwingt. Die Speicherschaltung SP ist ferner über einen von der Fehlerüberwachung F angesteuerten Schalter S mit dem spannungsgesteuerten Oszillator VCO verbunden. Zwischen Fehlerüberwachung F und Trägersignal-Regelspannungserzeugung TR ist ein Wobbeloszillator W mit vorgeschalteter Verzögerungsschaltung V angeordnet.

Die Wirkungsweise der Fangschaltung wird nachstehend erläutert: Im Idealfall entspricht die Trägerfrequenz des QAM Signals der Sollfrequenz. Die Trägersignal-Regelspannungserzeugung TR gibt dann die Regelspannung Null ab, die über die Speicherschaltung SP unverändert an den VCO-Eingang gelangt, und der VCO schwingt mit der Sollfrequenz.

Im Fall einer Frequenzablage ist am VCO-Eingang eine von Null abweichende Regelspannung vorhanden. Diese wird über den Schalter S der Speicherschaltung SP zugeführt, die diese Spannung zu der von der Trägersignal-Regelspannungserzeugung TR abgegebenen Spannung addiert. Da die Regelschleife geschlossen ist, verändert sich dadurch die Spannung am VCO-Eingang nicht, solange der Synchronzustand vorhanden ist.

Steigt bei einer Unterbrechung, z. B. durch einen Fadingeinbruch, die Bitfehlerrate über eine bestimmte Schwelle an, veranlaßt die Fehlerüberwachung F das Abtrennen der Speicherschaltung SP vom VCO-Eingang, bevor die Signalübertragung unterbrochen ist. Wird das Fading so tief, daß die Regelschleife aus der Synchronisation kommt, bleibt die Spannung am VCO-Eingang für längere Zeit konstant. Nach Zurückgehen des Fadings stimmt die VCO-Frequenz daher noch mit der, vor dem Fadingeinbruch vorhandenen Frequenz überein, wodurch das gewünschte schnelle Fangen erreicht wird.

Durch den Wobbeloszillator W mit vorgeschalteter Verzögerungschaltung V wird ein Fangen in jedem Fall, z. B. bei einer Frequenzablage nach langer Unterbrechung sichergestellt. Die Verzögerungsschaltung V, durch die der Zeitpunkt festgelegt wird, bis zu dem die Fehlerüberwachung eine Gutmeldung nicht abgibt, bewirkt ein verzögertes Einschalten des Wobbel-Oszillators W, dessen Abschalten jedoch ist unverzögert.

Die zum Erreichen der Synchronisierung bei großen Frequenzablagen z. B. infolge langer Unterbrechung, erforderliche Wobbelspannung steigt erst nach einigen Perioden auf die volle Amplitude an. Dieser Vorgang des Anschwingens mit kleiner Amplitude und späteren Ansteigens ist in Figur 2 dargestellt, in der der Verlauf der Wobbelspannung als Funktion der Amplitude A über der Zeit t aufgetragen ist. Mit Syn ist ein Punkt bezeichnet, an dem beispielsweise die Synchronisierung erfolgt.

Die eingangsseitige Pegelüberwachung P setzt beim Absinken des Pegels unter eine festgelegte Schwelle die Ausgangsspannung der Trägersignal-Regelspannungserzeugung TR auf Null.

## Patentansprüche

1. Fangschaltung für die Trägerrückgewinnung aus einem QAM-Signal in der aus einem Demodulator und einer aus einem spannungsgesteuerten Oszillator (VCO) und einer Trägersignal-Regelspannungserzeugung bestehenden Taktrückgewinnungsschaltung aufgebauten Demodulationsschaltung eines Digital-Funksystems,
   **dadurch gekennzeichnet,**
   daß an die Demodulationsschaltung eine Eingangspegelüberwachung (P) und eine ausgangsseitig angeschlossene Überwachungsschaltung (F) für die Bitfehlerrate angeschaltet sind, und daß zwischen Trägersignal-Regelspannungserzeugung (TR) und spannungsgesteuerten Oszillator (VCO) eine Speicherschaltung (SP) angeordnet ist, der im Fall einer Frequenzablage eine am VCO-Eingang anstehende, von Null abweichende Regelspannung über einen von der Fehlerüberwachung angesteuerten Schalter (S) zugeführt und in ihr zu der von der Trägersignal-Regelspannungserzeugung abgegebenen Spannung addiert wird und daß im Fall einer zu erwartenden Unterbrechung der Signalübertragung durch Ansteigen der Bitfehlerrate über einen bestimmten Schwellenwert die Fehlerüberwachung das Abtrennen der Speicherschaltung vom VCO-Eingang vor der Unterbrechung veranlaßt.

2. Fangschaltung nach Anspruch I,
   **dadurch gekennzeichnet,**
   daß zwischen Fehlerüberwachung (F) und Trägersignal-Regelspannungserzeugung (TR) ein Wobbeloszillator (W) mit vorgeschalteter Verzögerungsschaltung (V) angeordnet ist.

3. Fangschaltung nach Anspruch 2,
   **dadurch gekennzeichnet,**
   daß der Wobbeloszillator mit kleiner Amplitude anschwingt und erst nach einigen Perioden die volle Amplitude erreicht.

4. Fangschaltung nach einem der vorhergehenden Ansprüche,
   **dadurch gekennzeichnet,**
   daß die Pegelüberwachung beim Absinken des Pegels unter eine festgelegte Schwelle die Ausgangsspannung der Trägersignal-Regelspannungserzeugung auf Null setzt.

## Claims

1. Lock-in circuit for carrier recovery from a QAM signal in the demodulation circuit of a digital radio system constructed from a demodulator and a timing recovery circuit consisting of a voltage-controlled oscillator (VCO) and of a carrier signal control voltage generating circuit, characterised in that, connected to the demodulation circuit - there are an input level monitor (P) and a monitoring circuit (F) for the bit error rate, connected on the output side thereof, and in that arranged between the carrier signal voltage control generating circuit (TR) and the voltage controlled oscillator (VCO) there is a memory circuit (SP) to which, in the case of a frequency discrepancy, a control voltage which deviates from zero and is present at the VCO input is fed via a switch (S) that is triggered by the error monitor, the said control voltage being added to the voltage supplied by the carrier signal control voltage generating circuit in the said memory circuit (SP), and in that, in the case of an interruption in signal transmission, to be expected as a result of the bit error rate increasing above a specified threshold value, the error monitor causes the isolation of the memory circuit from the VCO input, before the interruption.

2. Lock-in circuit according to Claim 1, characterised in that a sweep oscillator (W), having a delay circuit (V) connected upstream thereof, is arranged between the error monitor (F) and the carrier signal control voltage generating circuit (TR).

3. Lock-in circuit according to Claim 2, characterised in that the sweep oscillator starts to oscillate with a small amplitude and does not reach the full amplitude for a number of periods.

4. Lock-in circuit according to one of the preceding claims, characterised in that the level monitor sets the output voltage of the carrier signal control voltage generating circuit to zero when the level falls below a specified threshold.

**Revendications**

1. Circuit d'accrochage pour la récupération de la porteuse à partir d'un signal QAM dans le circuit de démodulation d'un système radioélectrique numérique, constitué par un démodulateur et un circuit de récupération de cadence formé par un oscillateur commandé par la tension (VCO) et une unité de production d'une tension de réglage du signal de porteuse, caractérisé par le fait qu'au circuit de démodulation sont raccordés une unité (B) de contrôle du niveau d'entrée et un circuit de contrôle (F), raccordé côté sortie, pour les taux d'erreurs sur les bits, et qu'entre l'unité (TR) de production de la tension de régulation du signal de porteuse et l'oscillateur commandé par la tension (VCO) est disposé un circuit de mémoire (SP) auquel est envoyée, dans le cas d'un écart en fréquence, une tension de réglage différente de zéro et présente à l'entrée de l'oscillateur VCO, par l'intermédiaire d'un interrupteur (S) commandé par l'unité de contrôle d'erreurs et est ajoutée, dans ce circuit de mémoire, à la tension délivrée par l'unité de production de la tension de réglage du signal de porteuse, et que, dans le cas d'une interruption, à laquelle on peut s'attendre, de la transmission des signaux, sous l'effet de l'accroissement du taux d'erreurs sur les bits au-delà d'une valeur de seuil déterminée, le contrôle d'erreurs déclenche, avant l'interruption, la déconnexion du circuit de mémoire par rapport à l'entrée de l'oscillateur VCO.

2. Circuit d'accrochage suivant la revendication 1, caractérisé par le fait qu'un oscillateur de vobulation (W), en amont duquel est branché un circuit de retardement (V), est installé entre l'unité (M) de contrôle des erreurs et l'unité (TR) de production de la tension de régulation du signal de porteuse.

3. Circuit d'accrochage suivant la revendication 2, caractérisé par le fait que l'oscillateur de vobulation oscille avec une faible amplitude et atteint l'amplitude complètement uniquement au bout de quelques périodes.

4. Circuit d'accrochage suivant l'une des revendications précédentes, caractérisé par le fait que l'unité de contrôle de niveau règle la tension de sortie de l'unité de production de la tension de réglage du signal de porteuse à zéro, lorsque le niveau tombe au-dessous d'un seuil fixé.

# FIG 1

# FIG 2